# FASCICULE DE BREVET EUROPEEN

(11) **EP 3 241 068 B1**
(45) Date de publication et mention de la délivrance du brevet: **26.09.2018**
(21) Numéro de dépôt: 15823619.0
(22) Date de dépôt: 08.12.2015
(51) Int. Cl.: G02F 1/15

(54) **PROCÉDÉ DE TRAITEMENT THERMIQUE RAPIDE D'UN EMPILEMENT ÉLECTROCHROME TOUT SOLIDE COMPLET**
SCHNELLES WÄRMEBEHANDLUNGSVERFAHREN FÜR EINEN VOLLSTÄNDIGEN ELEKTROCHROMEN FESTKÖRPERSTAPEL
FAST HEAT TREATMENT METHOD FOR A COMPLETE ALL-SOLID-STATE ELECTROCHROMIC STACK

(30) Priorité: 31.12.2014 FR 1463473
(43) Date de publication de la demande: 08.11.2017
(73) Titulaire: Saint-Gobain Glass France, 92400 Courbevoie (FR)
(72) Inventeur: DUBRENAT, Samuel, 75017 Paris (FR); GIRET, Martine, 93220 Gagny (FR); YEH, Li-Ya, D-52511 Geilenkirchen (DE); GIRON, Jean-Christophe, Edina, Minnesota 55436 (US); LAMINE, Driss, 92160 Antony (FR)
(74) Mandataire: Saint-Gobain Recherche
(86) Numéro de dépôt international: PCT/FR2015/053382
(87) Numéro de publication internationale: WO 2016/108000

(56) Documents cités:
- FR-A1- 2 911 130
- US-A1- 2011 135 837

## Description

L'invention se rapporte au domaine des vitrages électrochromes. Elle concerne plus particulièrement un procédé de traitement thermique par irradiation d'un empilement électrochrome minéral complet sur un substrat transparent.

Les dispositifs électrochromes et en particulier les vitrages électrochromes comportent de manière connue un empilement électrochrome comprenant une succession de cinq fines couches indispensables au fonctionnement du dispositif, c'est-à-dire au changement de couleur réversible suite à l'application d'un potentiel électrique. Ces cinq couches fonctionnelles sont les suivantes :
- Une première couche électroconductrice transparente,
- Une couche électrochrome formée d'un matériau dont les propriétés optiques (absorption/réflexion) varient en fonction de son état d'oxydation,
- Une couche d'un électrolyte solide, isolant électronique et conducteur ionique,
- Une contre-électrode et
- Une deuxième couche électroconductrice transparente.
l'une ou l'autre des couches électroconductrices transparentes pouvant être en contact avec le substrat transparent.

Dans les systèmes électrochromes les plus répandus, ces cinq couches sont toutes constituées de matériaux solides inorganiques, le plus souvent des oxydes métalliques, et sont déposées par pulvérisation cathodique magnétron sur un substrat en verre, généralement dans une même installation de dépôt. Ils sont communément appelés systèmes électrochromes « tout solide».

Le matériau minéral électrochrome le plus utilisé est l'oxyde de tungstène. Cet oxyde est un matériau dit d'intercalation qui, lorsqu'il est réduit par l'apport d'électrons provenant de la première couche électroconductrice transparente, est capable d'insérer réversiblement des protons ou cations métalliques, en particulier des ions lithium. L'oxyde de tungstène est un matériau électrochrome à coloration cathodique, c'est-à-dire un matériau qui est coloré à l'état réduit et sensiblement incolore à l'état oxydé.

Ce matériau à coloration cathodique est associé à un deuxième matériau d'intercalation de cations (contre-électrode) qui est soit un matériau à coloration anodique (coloré à l'état oxydé/incolore à l'état réduit) soit un matériau incolore ou peu coloré dont les propriétés optiques ne changent pas significativement en fonction de son état d'oxydation.

Le procédé de fabrication par pulvérisation cathodique magnétron d'un tel système électrochrome minéral avec au moins cinq couches solides comporte une ou plusieurs étapes de traitement thermique (recuit). Certains matériaux, notamment les oxydes métalliques formant les deux couches conductrices transparentes les plus à l'extérieur, sont déposés par pulvérisation cathodique magnétron sous une forme plus ou moins amorphe et doivent être cristallisés à chaud, après dépôt, pour présenter une cristallinité et une conductivité suffisantes. Les performances et propriétés optiques du produit final dépendent fortement de ces étapes de recuit.

La bonne conductivité des couches électroconductrices transparentes détermine l'homogénéité de la coloration au-delà d'une certaine taille du vitrage ainsi que la vitesse de coloration/décoloration du système. On cherche donc généralement à augmenter le plus possible la conductivité des deux couches électroconductrices transparentes. Un recuit dans un four de recuit à trop haute température ou pendant une durée trop longue peut toutefois conduire à une altération des performances électrochromes du produit final obtenu, telle qu'une augmentation de la résistance (R_{carré}) des TCO ou une baisse du contraste entre l'état coloré et l'état incolore.

Dans le cadre de ses recherches visant à optimiser les performances de vitrages comportant des empilements électrochromes d'au moins cinq couches telles que décrites ci-dessus, la Demanderesse a réalisé des essais de traitement thermique rapide par irradiation superficielle de substrats revêtus d'empilements électrochromes complets. Un tel traitement rapide par laser ou par lampe flash pourrait en effet remplacer avantageusement le recuit final dans un four, à environ 400 °C, effectué classiquement sur la feuille de verre électrochrome avant son intégration dans un vitrage multiple.

A l'occasion de tels essais, la Demanderesse a constaté avec surprise qu'un recuit rapide superficiel par irradiation de l'empilement électrochrome complet à au moins cinq couches, permettait non seulement d'obtenir un système électrochrome équivalent en termes de contraste entre l'état incolore et coloré, mais que la réactivité de coloration/décoloration du système se trouvait significativement améliorée, même lorsque le recuit rapide par irradiation était réalisé sur un substrat préalablement soumis à un recuit usuel d'environ une heure dans un four à 400 °C.

Un recuit rapide par irradiation, par exemple par laser, d'un système électrochrome complet peut ainsi avantageusement remplacer un recuit usuel dans un four, ou bien il peut être réalisé en plus d'un tel recuit ; dans les deux cas il conduira à un produit qui se décolore et se recolore plus rapidement qu'un produit identique non soumis à un recuit par irradiation.

Le traitement thermique rapide par irradiation de la présente invention, même après recuit final préalable dans un four, n'altère ni n'améliore le contraste global entre l'état coloré et décoloré. Il permet d'obtenir des vitrages de coloration homogène de plus grande taille que le procédé connu prévoyant uniquement une étape de recuit final dans un four à 400 °C.

Il est connu que des traitements thermiques rapides par irradiation de revêtements minces minéraux permettent d'effectuer des recuits à haute température, c'est-à-dire à plusieurs centaines de degrés, des revêtements tout en maintenant le substrat sous-jacent à des températures relativement modérées.

L'aspect particulièrement surprenant dans la présente invention est l'observation que le procédé de traitement thermique par irradiation préserve certaines couches au sein même de l'empilement recuit, tout en augmentant la conductivité des couches électroconductrices transparentes, même après un recuit final réalisé dans un four de recuit.

La présente invention a donc pour objet un procédé de fabrication d'un vitrage électrochrome comprenant les étapes suivantes :
(a) la formation, sur une face d'une feuille de verre, d'un empilement électrochrome tout solide complet comprenant successivement
   - une première couche d'un oxyde conducteur transparent (TCO1),
   - une couche d'un matériau électrochrome minéral à coloration cathodique, appelée électrode électrochrome (EC),
   - une couche d'un électrolyte solide minéral conducteur ionique (Cl),
   - une couche d'un matériau d'intercalation de cations, appelée contre-électrode (CE), et
   - une deuxième couche d'un oxyde conducteur transparent (TCO2),
(b) le traitement thermique de cet empilement électrochrome complet, d'au moins cinq couches minérales, par irradiation avec un rayonnement présentant une longueur d'onde comprise entre 500 et 2000 nm, ledit rayonnement étant issu d'un dispositif de rayonnement placé en regard de l'empilement électrochrome, un déplacement relatif étant créé entre ledit dispositif de rayonnement et ledit substrat de manière à porter l'empilement électrochrome à une température au moins égale à 300 °C pendant une durée inférieure à 100 millisecondes.

Les cinq couches minérales (TCO1/EC/CI/CE/TCO2) énumérées ci-dessus sont les seules couches fonctionnelles indispensables au bon fonctionnement du vitrage électrochrome. La feuille de verre servant de support à l'empilement électrochrome peut être en contact avec la première ou la deuxième couche d'oxyde conducteur transparent. De préférence, elle est en contact avec la première couche d'oxyde conducteur transparent (TCO1).

L'empilement électrochrome peut comprendre d'autres couches utiles, qui ne sont toutefois pas indispensables à l'obtention d'un comportement électrochrome. Il peut par exemple comporter, entre le substrat en verre et la couche de TCO adjacente, une couche barrière, connue pour empêcher par exemple la migration de d'ions sodium. L'empilement peut également comprendre une ou plusieurs couches anti-reflets comportant par exemple une alternance de couches transparentes à haut indice et bas indice de réfraction, ou encore une ou plusieurs couches recouvrant la couche TCO supérieure et servant à protéger l'empilement contre les rayures et/ou l'humidité.

La première partie du procédé selon la présente invention, à savoir la fabrication de l'empilement électrochrome, comporte une succession d'étapes connues en tant que telles (voir par exemple EP 1 696 261 au nom de la Demanderesse).

Le substrat en verre utilisé est typiquement du verre *float,* éventuellement découpé, poli et lavé.

L'ensemble des couches minérales de l'empilement est de préférence déposé par pulvérisation cathodique, réactive ou non, assistée par champ magnétique, généralement dans une même installation sous vide.

Les matériaux susceptibles de servir en tant qu'oxydes conducteurs transparents pour les deux couches TCO sont connus. On peut citer à titre d'exemple l'oxyde d'indium, l'oxyde mixte d'étain et d'indium, l'oxyde d'étain, l'oxyde d'étain dopé, l'oxyde de zinc, l'oxyde de zinc dopé, l'oxyde de ruthénium, l'oxyde de ruthénium dopé et l'oxyde de zinc dopé à l'aluminium et/ou au gallium. On utilisera de préférence l'oxyde mixte d'étain et d'indium (ITO) ou l'oxyde de zinc dopé à l'aluminium et/ou au gallium. L'épaisseur de chacune des couches TCO est de préférence comprise entre 10 et 1000 nm, de préférence entre 50 et 800 nm.

Le matériau électrochrome minéral à coloration cathodique de l'électrode électrochrome EC est de préférence l'oxyde de tungstène (WOₓ) hydrogéné et/ou lithié et/ou nitruré, ou un oxyde, nitruré ou non, dopé avec un ou plusieurs métaux de transition, tels que Nb, Zr, Ti, hydrogéné et/ou lithié. C'est un matériau dit d'intercalation capable d'insérer réversiblement un grand nombre de cations dans sa structure minérale. Ce matériau est avantageusement déposé directement sur la première couche TCO en une épaisseur comprise de préférence entre 100 nm et 2 µm, en particulier entre 200 nm et 1000 nm.

Sur cette couche électrochrome est ensuite déposé l'électrolyte solide. Les électrolytes solides minéraux ayant une conductivité cationique appropriée sont connus. On peut citer à titre d'exemples de matériaux préférés susceptibles d'être utilisés en tant que conducteur ionique (IC) dans la présente invention ceux choisis dans le groupe formé par la silice (SiO₂), l'oxyde de tantale (Ta₂O₅) et l'oxyde de niobium (Nb₂O₅). La couche IC peut être également un oxyde et/ou nitrure ou oxy-nitrure de formule générale MOₓH_{y}N_{z} ou M est un métal de transition ou un mélange de plusieurs éléments choisis parmi Ta, Si, Al, Nb, Zr, Ti et Bi. La couche IC peut également être remplacée par une région interfaciale.

L'épaisseur de la couche d'électrolyte est de préférence comprise entre environ 10 nm et 70 nm, en particulier entre 20 nm et 60 nm.

Dans l'étape suivante, un deuxième matériau d'intercalation de cations est déposé en tant que contre-électrode (CE) sur l'électrolyte solide. Lorsque les cations utilisés sont des ions lithium, ce matériau d'intercalation est de préférence l'oxyde mixte de tungstène et de nickel (NiWO). Il peut également s'agir d'un compose' de formule NiOₓLi_{y}N_{z}M_{w}, hydraté ou non, ou M est un métal de transition ou un mélange de métaux de transition.

Lorsqu'on utilise un système protonique l'oxyde d'iridium ou l'oxyde de nickel, hydraté ou non, ou un mélange de ceux-ci est de préférence utilisé en tant que matériau d'intercalation de la contre-électrode.

L'épaisseur de la contre-électrode est généralement comprise entre 50 nm et 600 nm, en particulier entre 150 nm et 250 nm.

Lorsque les cations échangés, *via* l'électrolyte solide, entre le matériau électrochrome et la contre-électrode sont des ions lithium, il est nécessaire de procéder ensuite à l'introduction de lithium dans l'empilement électrochrome. Cela peut se faire par pulvérisation cathodique d'une couche de lithium métallique sur la couche de la contre-électrode. La pénétration des ions lithium dans le matériau de la contre-électrode, de l'éléctrolyte et du matériau électrochrome se fera au cours du recuit final, au four et/ou par irradiation.

Lorsque les cations échangés, via l'électrolyte solide, entre le matériau électro chrome et la contre-électrode sont des protons, en effectue les étapes de dépôt magnétron correspondant en introduisant de l'hydrogène dans le plasma.

Puis, pour finir, on dépose une deuxième couche TCO, typiquement sensiblement identique à celle de la première couche TCO.

Dans un mode de réalisation du procédé de la présente invention, le substrat portant l'empilement électrochrome complet est soumis immédiatement après le dépôt de la dernière couche de TCO (TCO1 ou TCO2) à l'étape de traitement thermique par irradiation. Autrement dit, le substrat portant l'empilement électrochrome complet n'est pas préalablement soumis à une étape de recuit thermique dans un four à recuit.

Dans un autre mode de réalisation, l'étape de traitement thermique est mise en oeuvre sur le substrat électrochrome recuit. Autrement dit, dans ce mode de réalisation la formation d'un empilement électrochrome tout solide complet comprend une étape de recuit final de quelques minutes, typiquement de 1 à 5 minutes, dans un four de recuit à une température comprise entre 350°C et 450°C, en particulier entre 370°C et 410°C.

Le premier mode de réalisation (sans recuit préalable) est particulièrement intéressant d'un point de vue énergétique et se traduit par un raccourcissement significatif du procédé de fabrication.

Le deuxième mode de réalisation (avec recuit préalable) est intéressant parce qu'il permet d'obtenir des empilements avec des conductivités des couches TCO particulièrement élevées, ce qui explique en partie l'accélération du processus de coloration/décoloration du vitrage.

Selon un mode de réalisation préféré, le dispositif de rayonnement est un laser, de préférence un laser émettant un faisceau laser, formant au niveau de l'empilement électrochrome à traiter, une ligne couvrant toute la largeur de l'empilement électrochrome.

Le rayonnement laser est de préférence généré par des modules comprenant une ou plusieurs sources laser ainsi que des optiques de mise en forme et de redirection.

Les sources laser sont typiquement des diodes laser ou des lasers fibrés, notamment des lasers à fibre, à diodes ou encore à disque. Les diodes laser permettent d'atteindre de manière économique de fortes densités de puissance par rapport à la puissance électrique d'alimentation, pour un faible encombrement. L'encombrement des lasers fibrés est encore plus réduit, et la puissance linéique obtenue peut être encore plus élevée, pour un coût toutefois plus important. On entend par lasers fibrés des lasers dans lesquels le lieu de génération de la lumière laser est déporté spatialement par rapport à son lieu de délivrance, la lumière laser étant délivrée au moyen d'au moins une fibre optique. Dans le cas d'un laser à disque, la lumière laser est générée dans une cavité résonnante dans laquelle se trouve le milieu émetteur qui se présente sous la forme d'un disque, par exemple un disque mince (d'environ 0,1 mm d'épaisseur) en Yb:YAG. La lumière ainsi généré est couplée dans au moins une fibre optique dirigée vers le lieu de traitement. Les lasers à fibre ou à disque sont de préférence pompés optiquement à l'aide de diodes laser.

Le rayonnement issu des sources laser est de préférence continu.

La longueur d'onde du rayonnement laser est comprise dans un domaine allant de 500 à 2000 nm, de préférence de 700 à 1100 nm, en particulier de 800 à 1000 nm. Des diodes laser de puissance émettant à une ou plusieurs longueurs d'onde choisie parmi 808 nm, 880 nm, 915 nm, 940 nm ou 980 nm se sont révélées particulièrement bien appropriées. Dans le cas d'un laser à disque, la longueur d'onde est par exemple de 1030 nm (longueur d'onde d'émission pour un laser Yb :YAG). Pour un laser à fibre, la longueur d'onde est typiquement de 1070 nm.

Dans le cas de lasers non fibrés, les optiques de mise en forme et de redirection comprennent de préférence des lentilles et des miroirs, et sont utilisées comme moyens de positionnement, d'homogénéisation et de focalisation du rayonnement.

Les moyens de positionnement ont pour but le cas échéant de disposer selon une ligne les rayonnements émis par les sources laser. Ils comprennent de préférence des miroirs. Les moyens d'homogénéisation ont pour but de superposer les profils spatiaux des sources laser afin d'obtenir une puissance linéique homogène tout au long de la ligne. Les moyens d'homogénéisation comprennent de préférence des lentilles permettant la séparation des faisceaux incidents en faisceaux secondaires et la recombinaison desdits faisceaux secondaires en une ligne homogène. Les moyens de focalisation du rayonnement permettent de focaliser le rayonnement sur l'empilement électrochrome à traiter, sous la forme d'une ligne de longueur et de largeur voulues. Les moyens de focalisation comprennent de préférence un miroir focalisant ou une lentille convergente.

Dans le cas de lasers fibrés, les optiques de mise en forme sont de préférence regroupées sous la forme d'une tête optique positionnée à la sortie de la fibre optique ou de chaque fibre optique.

Les optiques de mise en forme desdites têtes optiques comprennent de préférence des lentilles, des miroirs et des prismes et sont utilisées comme moyens de transformation, d'homogénéisation et de focalisation du rayonnement.

Les moyens de transformation comprennent des miroirs et/ou des prismes et servent à transformer le faisceau circulaire, obtenu en sortie de la fibre optique, en un faisceau non circulaire, anisotrope, en forme de ligne. Pour cela les moyens de transformation augmentent la qualité du faisceau selon l'un de ses axes (axe rapide, ou axe de la largeur l de la ligne laser) et diminuent la qualité du faisceau selon l'autre (axe lent, ou axe de la longueur L de la ligne laser).

Les moyens d'homogénéisation superposent les profils spatiaux des sources laser afin d'obtenir une puissance linéique homogène tout au long de la ligne. Les moyens d'homogénéisation comprennent de préférence des lentilles permettant la séparation des faisceaux incidents en faisceaux secondaires et la recombinaison desdits faisceaux secondaires en une ligne homogène.

Enfin, les moyens de focalisation du rayonnement permettent de focaliser le rayonnement au niveau du plan de travail, c'est-à-dire dans le plan de l'empilement électrochrome à traiter, sous la forme d'une ligne de longueur et de largeur voulues. Les moyens de focalisation comprennent de préférence un miroir focalisant ou une lentille convergente.

Lorsqu'une seule ligne laser est utilisée, la longueur de la ligne est avantageusement égale à la largeur du substrat. Cette longueur est typiquement d'au moins 1 m, notamment d'au moins 2 m et en particulier d'au moins 3 m. On peut également utiliser plusieurs lignes, disjointes ou non, mais disposées de manière à traiter toute la largeur du substrat. Dans ce cas, la longueur de chaque ligne laser est de préférence d'au moins 10 cm ou 20 cm, notamment comprise dans un domaine allant de 30 à 100 cm, notamment de 30 à 75 cm, voire de 30 à 60 cm.

On entend par « longueur » de la ligne la plus grande dimension de la ligne, mesurée au niveau de la surface de l'empilement électrochrome, et par « largeur » la dimension selon une seconde direction perpendiculaire à la première. Comme il est d'usage dans le domaine des lasers, la largeur (w) de la ligne correspond à la distance, selon cette seconde direction, entre l'axe du faisceau où l'intensité du rayonnement est maximale et le point où l'intensité du rayonnement est égale à 1/e² fois l'intensité maximale. Si l'axe longitudinal de la ligne laser est nommé x, on peut définir une distribution de largeurs selon cet axe, nommée w(x).

La largeur moyenne de la ou chaque ligne laser est de préférence d'au moins 35 micromètres, notamment comprise dans un domaine allant de 40 à 100 micromètres ou de 40 à 70 micromètres. Dans l'ensemble du présent texte on entend par « moyenne » la moyenne arithmétique. Sur toute la longueur de la ligne, la distribution de largeurs est étroite afin de limiter autant que faire se peut toute hétérogénéité de traitement. Ainsi, la différence entre la largeur la plus grande et la largeur la plus petite vaut de préférence au plus 10% de la valeur de la largeur moyenne. Ce chiffre est de préférence d'au plus 5% et même 3%.

Les optiques de mise en forme et de redirection, notamment les moyens de positionnement, peuvent être ajustées manuellement ou à l'aide d'actuateurs permettant de régler leur positionnement à distance. Ces actuateurs (typiquement des moteurs ou des cales piézoélectriques) peuvent être commandés manuellement et/ou être réglés automatiquement. Dans ce dernier cas, les actuateurs seront de préférence connectés à des détecteurs ainsi qu'à une boucle de rétroaction.

Au moins une partie des modules laser, voire leur totalité est de préférence disposée en boîte étanche, avantageusement refroidie, notamment ventilée, afin d'assurer leur stabilité thermique.

Les modules laser sont de préférence montés sur une structure rigide, appelée « pont », à base d'éléments métalliques, typiquement en aluminium. La structure ne comprend de préférence pas de plaque de marbre. Le pont est de préférence positionné de manière parallèle aux moyens de convoyage de sorte que le plan focal de la ligne laser reste parallèle à la surface du substrat à traiter. De préférence, le pont comprend au moins quatre pieds, dont la hauteur peut être individuellement ajustée pour assurer un positionnement parallèle en toutes circonstances. L'ajustement peut être assuré par des moteurs situés au niveau de chaque pied, soit manuellement, soit automatiquement, en relation avec un capteur de distance. La hauteur du pont peut être adaptée (manuellement ou automatiquement) pour prendre en compte l'épaisseur du substrat à traiter, et s'assurer ainsi que le plan du substrat coïncide avec le plan focal de la ligne laser.

La puissance linéique de la ligne laser est de préférence d'au moins 300 W/cm, avantageusement 350 ou 400 W/cm, notamment 450 W/cm, voire 500 W/cm et même 550 W/cm. Elle est même avantageusement d'au moins 600 W/cm, notamment 800 W/cm, voire 1000 W/cm. La puissance linéique est mesurée à l'endroit où la ou chaque ligne laser est focalisée sur l'empilement électrochrome. Elle peut être mesurée en disposant un détecteur de puissance le long de la ligne, par exemple un puissance-mètre calorimétrique, tel que notamment le puissance-mètre Beam Finder S/N 2000716 de la société Coherent Inc. La puissance est avantageusement répartie de manière homogène sur toute la longueur de la ou chaque ligne. De préférence, la différence entre la puissance la plus élevée et la puissance la plus faible vaut moins de 10% de la puissance moyenne.

La densité d'énergie fournie à l'empilement électrochrome par le dispositif laser est de préférence d'au moins 20 J/cm², voire d'au moins 30 J/cm².

Selon un mode de réalisation préféré, le rayonnement est issu d'au moins une lampe à lumière intense pulsée (IPL, *Intense Pulsed Light*) ci-après appelée lampe flash.

De telles lampes flash se présentent généralement sous la forme de tubes en verre ou en quartz scellés et remplis d'un gaz rare, munis d'électrodes à leurs extrémités. Sous l'effet d'une impulsion électrique de courte durée, obtenue par décharge d'un condensateur, le gaz s'ionise et produit une lumière incohérente particulièrement intense. Le spectre d'émission comporte généralement au moins deux raies d'émission ; il s'agit de préférence d'un spectre continu présentant un maximum d'émission dans le proche ultraviolet.

La lampe est de préférence une lampe au xénon. Elle peut également être une lampe à l'argon, à l'hélium ou au krypton. Le spectre d'émission comprend de préférence plusieurs raies, notamment à des longueurs d'onde allant de 160 à 1000 nm.

La durée de chaque impulsion de lumière est de préférence comprise dans un domaine allant de 0,05 à 20 millisecondes, notamment de 0,1 à 5 millisecondes. Le taux de répétition est de préférence compris dans un domaine allant de 0,1 à 5 Hz, notamment de 0,2 à 2 Hz.

Le rayonnement peut être issu de plusieurs lampes disposées côte à côte, par exemple 5 à 20 lampes, ou encore 8 à 15 lampes, de manière à traiter simultanément une zone plus large. Toutes les lampes peuvent dans ce cas émettre des flashs de manière simultanée.

La ou chaque lampe est de préférence disposée transversalement aux plus grands côtés du substrat. La ou chaque lampe possède une longueur de préférence d'au moins 1 m notamment 2 m et même 3 m de manière à pouvoir traiter des substrats de grande taille.

Le condensateur est typiquement chargé à une tension de 500 V à 500 kV. La densité de courant est de préférence d'au moins 4000 A/cm². La densité d'énergie totale émise par les lampes flash, rapportée à la surface de l'empilement électrochrome, est de préférence comprise entre 1 et 100 J/cm², notamment entre 1 et 30 J/cm², voire entre 5 et 20 J/cm².

Les puissances et densités d'énergies élevées permettent de chauffer l'empilement électrochrome très rapidement à des températures élevées.

Au cours de l'étape (b) du procédé selon l'invention chaque point de l'empilement électrochrome est de préférence porté à une température d'au moins 300°C, notamment 350°C, voire 400°C, et même 500°C ou 600°C. La température maximale est normalement atteinte au moment où le point de l'empilement considéré passe sous le dispositif de rayonnement, par exemple sous la ligne laser ou sous la lampe flash. A un instant donné, seuls les points de la surface de l'empilement électrochrome situés sous le dispositif de rayonnement (par exemple sous la ligne laser) et dans ses environs immédiats (par exemple à moins d'un millimètre) sont normalement à une température d'au moins 300°C. Pour des distances à la ligne laser (mesurées selon la direction de défilement) supérieures à 2 mm, notamment 5 mm, y compris en aval de la ligne laser, la température de l'empilement électrochrome est normalement d'au plus 50°C, et même 40°C ou 30°C.

Chaque point de l'empilement électrochrome subit le traitement thermique (ou est porté à la température maximale) pendant une durée avantageusement comprise dans un domaine allant de 0,05 à 10 ms, notamment de 0,1 à 5 ms, ou de 0,1 à 2 ms. Dans le cas d'un traitement au moyen d'une ligne laser, cette durée est fixée à la fois par la largeur de la ligne laser et par la vitesse de déplacement relatif entre le substrat et la ligne laser. Dans le cas d'un traitement au moyen d'une lampe flash, cette durée correspond à la durée du flash.

Le dispositif de lampe flash peut être installé à l'intérieur du système de dépôt sous vide ou à l'extérieur en atmosphère contrôlée ou a l'air ambiant.

Le rayonnement laser est en partie réfléchi par l'empilement électrochrome à traiter et en partie transmis au travers du substrat. Pour des raisons de sécurité, il est préférable de disposer sur le chemin de ces rayonnements réfléchis et/ou transmis des moyens d'arrêt du rayonnement. Il s'agira typiquement de boitiers métalliques refroidis par circulation de fluide, notamment d'eau. Pour éviter que le rayonnement réfléchi n'endommage les modules laser, l'axe de propagation de la ou chaque ligne laser forme un angle préférentiellement non-nul avec la normale au substrat, typiquement un angle compris entre 5 et 20°.

Afin de renforcer l'efficacité du traitement, il est préférable qu'au moins une partie du rayonnement laser (principal) transmise au travers du substrat et/ou réfléchie par l'empilement électrochrome soit redirigée en direction dudit substrat pour former au moins un rayonnement laser secondaire, qui de préférence impacte le substrat au même endroit que le rayonnement laser principal, avec avantageusement la même profondeur de foyer et le même profil. La formation du ou de chaque rayonnement laser secondaire met avantageusement en oeuvre un montage optique ne comprenant que des éléments optiques choisis parmi les miroirs, les prismes et les lentilles, notamment un montage optique constitué de deux miroirs et d'une lentille, ou d'un prisme et d'une lentille. En récupérant au moins une partie du rayonnement principal perdu et en le redirigeant vers le substrat, le traitement thermique s'en trouve considérablement amélioré. Le choix d'utiliser la partie du rayonnement principal transmise au travers du substrat (mode « transmission ») ou la partie du rayonnement principal réfléchie par l'empilement électrochrome (mode « réflexion »), ou éventuellement d'utiliser les deux, dépend de la nature de la couche et de la longueur d'onde du rayonnement laser.

Lorsque le substrat est en déplacement, notamment en translation, il peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement. Le moyen de convoyage comprend de préférence un châssis rigide et une pluralité de rouleaux. Le pas des rouleaux est avantageusement compris dans un domaine allant de 50 à 300 mm. Les rouleaux comprennent de préférence des bagues métalliques, typiquement en acier, recouvertes de bandages en matière plastique. Les rouleaux sont de préférence montés sur des paliers à jeu réduit, typiquement à raison de trois rouleaux par palier. Afin d'assurer une parfaite planéité du plan de convoyage, le positionnement de chacun des rouleaux est avantageusement réglable. Les rouleaux sont de préférence mus à l'aide de pignons ou de chaînes, de préférence de chaînes tangentielles, entraînés par au moins un moteur.

La vitesse du mouvement de déplacement relatif entre le substrat et la ou chaque source de rayonnement (notamment la ou chaque ligne laser) est avantageusement d'au moins 2 m/min ou 4 m/min, notamment 5 m/min et même 6 m/min ou 7 m/min, ou encore 8 m/min et même 9 m/min ou 10 m/min. Selon certains modes de réalisation, en particulier lorsque l'absorption du rayonnement par l'empilement électrochrome est élevée ou lorsque l'empilement électrochrome peut être déposé avec de grandes vitesses de dépôt, la vitesse du mouvement de déplacement relatif entre le substrat et la source de rayonnement (notamment la ou chaque ligne laser ou lampe flash) est d'au moins 12 m/min ou 15 m/min, notamment 20 m/min et même 25 ou 30 m/min. Afin d'assurer un traitement qui soit le plus homogène possible, la vitesse du mouvement de déplacement relatif entre le substrat et la ou chaque source de rayonnement (notamment la ou chaque ligne laser ou lampe flash) varie lors du traitement d'au plus 10% en relatif, notamment 2% et même 1% par rapport à sa valeur nominale.

De préférence, la ou chaque source de rayonnement (notamment ligne laser ou lampe flash) est fixe, et le substrat est en mouvement, si bien que les vitesses de déplacement relatif correspondront à la vitesse de défilement du substrat.

Une autre alternative, utilisée dans l'industrie des semi-conducteurs ou des dispositifs photo-voltaïques, consiste à laisser le substrat fixe et à balayer la surface avec le faisceau laser ou à déplacer le substrat sous un balayage de faisceau laser.

L'invention est illustrée ci-après à l'aide d'exemples de réalisation non limitatifs.

### Exemple 1

### Recuit laser d'un empilement électrochrome tout solide protonique

On dépose sur une feuille de verre Planilux®, dans une installation de pulvérisation cathodique magnétron, l'empilement électrochrome suivant :
Substrat : Planilux (100 mm x 100 mm x 2,1 mm)
TCO1 : ITO (500nm)
Couche électrochrome : IrOₓ(85nm)
Electrolyte solide : WO₃(100nm)/Ta₂O₅(200nm)
Contre-électrode : HₓWO₃(400nm)
TCO2 : ITO (100nm)

La première couche d'ITO est déposée à une température de 350 °C. Toutes les autres couches sont déposées sans chauffage, à l'exception de la TCO2 qui est déposée à une température supérieure à 100 °C.

Les échantillons selon l'état de la technique ne sont soumis à aucun recuit thermique final au four. En effet, le chauffage au four d'un tel empilement électrochrome protonique aboutirait à une dégradation, voire une perte, du comportement électrochrome.

Les échantillons selon l'invention sont soumis à un traitement thermique rapide par laser. Pour cela, on les fait passer sous un rayon laser d'une puissance comprise entre environ 1200 W et 1300 W (diode laser, 980 nm, mode CW) formant, au niveau du plan de travail, une ligne de 100 mm de long et de 0,1 mm de large. La vitesse de défilement est de 10 m/minute.

Le tableau 1 ci-dessous montre les transmissions lumineuses à l'état coloré et décoloré des échantillons préparés avec et sans traitement laser ainsi que la résistance par carré (R□) de la couche d'ITO déposée en dernier (TCO2).

**Tableau 1**

| | TL_{décoloré} | TL_{coloré} | Contraste | R□ |
|---|---|---|---|---|
| Sans recuit laser | 55 % | 2 % | 27,5 | 31 Ω/□ |
| Avec recuit laser | 63 % | 1,5 % | 42 | 27 Ω/□ |

On constate que le traitement thermique rapide par laser diminue la résistance de la couche de TCO2 (ITO) déposée en dernier ce qui a pour conséquence une augmentation de la vitesse de commutation (coloration/décoloration) des échantillons.

Contrairement à ce que l'on aurait pu penser, le chauffage par laser de l'empilement électrochrome complet n'aboutit pas à une dégradation des propriétés électrochromes, mais on observe au contraire une amélioration du contraste (TL_{décoloré}/ TL_{coloré}). Par ailleurs la transmission lumineuse à l'état décoloré est significativement augmentée, ce qui est surprenant et difficilement atteignable par d'autres moyens.

Des essais de vieillissement accéléré à 80 °C montrent que la longévité des empilements est la même pour les échantillons selon l'invention (traités au laser) et les échantillons comparatifs (sans traitement thermique final). Les améliorations dues au traitement laser (R□ et vitesse de commutation) sont conservées tout au long de l'essai de vieillissement accéléré.

Cet exemple montre ainsi que le traitement thermique rapide par laser d'un empilement électrochrome protonique tout solide permet d'améliorer le contraste et la vitesse de commutation du vitrage électrochrome obtenu.

### Exemple 2

### Recuit laser d'un empilement électrochrome tout solide au lithium

On dépose sur une feuille de verre Planilux®, dans une installation de pulvérisation cathodique magnétron, l'empilement électrochrome suivant :
- Substrat : Planilux (100 mm x 100 mm x 2,2 mm)
- Revêtement antireflet
- TCO1 : ITO (350 nm)
- Couche électrochrome : WO₃(350 nm)
- Electrolyte solide : SiOₓ (30 nm)
- Contre-électrode : NiWOₓ (250 nm)
- TCO2 : ITO (400 nm)
- Revêtement antireflet

Une partie des échantillons est ensuite soumis à un recuit thermique dans un four (2 minutes à 400 °C). Une autre partie des échantillons n'est soumise à aucun recuit thermique. Ces échantillons sont utilisés tels quels pour l'évaluation de leur comportement électrochrome.

On soumet ensuite une partie de chacun de ces lots d'échantillons (avec et sans recuit thermique dans un four) à un traitement thermique rapide par laser dans les conditions suivantes :
Source laser : diodes laser 980 nm, mode CW
Puissance laser : environ 1400 W
Vitesse de défilement : 10 m/min
Le rayon laser forme au niveau du plan de travail une ligne laser d'une longueur de 100 mm et d'une largeur de 0,1 mm.

Le tableau 2 rassemble les valeurs de la transmission lumineuse (TL) à l'état coloré et décoloré, le contraste et la résistance par carré (R□) des échantillons comparatifs (avec et sans recuit au four) et des échantillons selon l'invention (avec ou sans recuit préalable au four).

**Tableau 2**

| | Echantillons comparatifs (sans recuit laser) | | | | Echantillons selon l'invention (avec recuit laser) | | | |
|---|---|---|---|---|---|---|---|---|
| | TL_{décoloré} | TL_{coloré} | Contr | R□ | TL_{décoloré} | TL_{coloré} | Contr | R□ |
| Sans recuit | 42% | 24% | 1,75 | 18 Ω/□ | 65% | 1,7 | 38 | 6,4 Ω/□ |
| Avec recuit | 65% | 1,6% | 40 | 6,5 Ω/□ | 66% | 1,8 | 37 | 5,7 Ω/□ |

On constate qu'en termes de contraste, les échantillons selon l'invention obtenus après recuit laser sont équivalents aux échantillons selon l'état de la technique ayant subi un recuit au four. Le recuit rapide laser, plus rapide que le recuit au four, peut donc avantageusement remplacer celui-ci dans une chaîne de production.

On observe par ailleurs que la résistance par carré des échantillons soumis à un recuit rapide par laser est sensiblement réduite par rapport aux échantillons comparatifs, même lorsque ceux-ci ont été préalablement soumis à un recuit au four. Cette réduction de la R□ se traduit par une augmentation de la vitesse de commutation des vitrages obtenus, en particulier de la vitesse de coloration. Le tableau 3 ci-après rassemble les temps de coloration (T_{coloration}) et de décoloration (T_{décoloration}) des échantillons du tableau 2.

**Tableau 3**

| | Echantillons comparatifs (sans recuit laser) | | Echantillons selon l'invention (avec recuit laser) | |
|---|---|---|---|---|
| | T_{coloration} | T_{décoloration} | T_{coloration} | T_{décoloration} |
| Sans recuit four | > 18 min | >10 min | 38 secondes | 22 secondes |
| Avec recuit four | 37 secondes | 21 secondes | 28 secondes | 18 secondes |

## Revendications

1. Procédé de fabrication d'un vitrage électrochrome comprenant les étapes suivantes :
(a) la formation, sur une face d'une feuille de verre, d'un empilement électrochrome tout solide complet comprenant successivement
- une première couche d'un oxyde conducteur transparent (TCO1),
- une couche d'un matériau électrochrome minéral à coloration cathodique, appelée électrode électrochrome (EC),
- une couche d'un électrolyte solide minéral conducteur ionique (Cl),
- une couche d'un matériau d'intercalation de cations, appelée contre-électrode (CE), et
- une deuxième couche d'un oxyde conducteur transparent (TCO2),
(b) le traitement thermique de l'empilement électrochrome complet par irradiation avec un rayonnement présentant une longueur d'onde comprise entre 500 et 2000 nm, ledit rayonnement étant issu d'un dispositif de rayonnement placé en regard de l'empilement électrochrome, un déplacement relatif étant créé entre ledit dispositif de rayonnement et ledit substrat de manière à porter l'empilement électrochrome à une température au moins égale à 300 °C pendant une durée inférieure à 100 millisecondes.

2. Procédé selon la revendication 1, **caractérisé par le fait que** la formation d'un empilement électrochrome tout solide complet comprend une étape de recuit final dans un four de recuit, de préférence à une température comprise entre 350 et 450 °C, en particulier entre 370 et 410 °C.

3. Procédé selon la revendication 1 ou 2, dans lequel l'oxyde conducteur transparent formant les couches d'oxyde conducteur transparent TCO1 et TCO2 est choisi dans le groupe formé par l'oxyde mixte d'étain et d'indium (ITO) et l'oxyde de zinc dopé à l'aluminium et/ou au gallium.

4. Procédé selon l'une quelconque des revendications précédentes, dans lequel le matériau électrochrome minéral à coloration cathodique de l'électrode électrochrome EC est l'oxyde de tungstène (WOₓ).

5. Procédé selon l'une quelconque des revendications précédentes, dans lequel le matériau d'intercalation de cations de la contre-électrode (CE) est choisi dans le groupe formé par l'oxyde mixte de tungstène et de nickel (NiWO) et l'oxyde d'iridium.

6. Procédé selon l'une quelconque des revendications précédentes, dans lequel l'électrolyte solide minéral conducteur ionique (IC) est choisi dans le groupe formé par la silice (SiO₂), l'oxyde de tantale (Ta₂O₅) et l'oxyde de niobium (Nb₂O₅).

7. Procédé selon l'une des revendications précédentes, dans lequel la température de la face dudit substrat opposée à ladite première face n'excède pas 100°C, voire 50°C, et notamment 30°C, pendant le traitement thermique.

8. Procédé selon l'une des revendications précédentes, dans lequel le dispositif de rayonnement est un laser, de préférence un laser émettant un faisceau laser formant au niveau de l'empilement électrochrome une ligne couvrant toute la largeur de l'empilement électrochrome.

9. Procédé selon l'une des revendications 1 à 7, dans lequel le dispositif de rayonnement est une lampe flash.

10. Procédé selon l'une quelconque des revendications précédentes, dans lequel le dépôt de l'ensemble des couches minces de l'empilement électrochrome est réalisé par pulvérisation cathodique assistée par champ magnétique.

## Patentansprüche

1. Verfahren zur Herstellung einer elektrochromen Verglasung, das die folgenden Schritte umfasst:
(a) das Bilden, auf einer Seite einer Glasscheibe, eines vollständigen elektrochromen Festkörperstapels, umfassend aufeinanderfolgend
- eine erste Schicht eines transparenten leitenden Oxids (TCO1),
- eine Schicht eines kathodisch färbenden mineralischen elektrochromen Materials, bezeichnet als elektrochrome Elektrode (EC),
- eine Schicht eines ionisch leitenden mineralischen festen Elektrolyten (Cl),
- eine Schicht eines Kationenzwischenlagematerials, bezeichnet als Gegenelektrode (CE), und
- eine zweite Schicht eines transparenten leitenden Oxids (TCO2),
(b) thermisches Behandeln des vollständigen elektrochromen Stapels durch Bestrahlen mit einer Strahlung, die eine Wellenlänge zwischen 500 und 2000 nm aufweist, wobei die Strahlung von einer gegenüber dem elektrochromen Stapel platzierten Strahlungsvorrichtung stammt, wobei zwischen der Strahlungsvorrichtung und dem Substrat eine relative Verlagerung derart vorgenommen wird, das der elektrochrome Stapel auf eine Temperatur gebracht wird, die während einer Dauer von weniger als 100 Millisekunden mindestens gleich 300 °C beträgt.

2. Verfahren nach Anspruch 1, **dadurch gekennzeichnet, dass** das Bilden eines vollständigen elektrochromen Festkörperstapels einen Schritt des abschließenden Temperns in einem Temperofen vorzugsweise bei einer Temperatur zwischen 350 und 450 °C, insbesondere zwischen 370 und 410 °C umfasst.

3. Verfahren nach Anspruch 1 oder 2, wobei das transparente leitende Oxid, das die transparenten leitenden Oxidschichten TCO1 und TCO2 bildet, aus der Gruppe ausgewählt ist, die von dem Zinn- und Indium-Mischoxid (ITO) und dem aluminium- und/oder galliumdotierten Zinkoxid gebildet ist.

4. Verfahren nach einem der vorangehenden Ansprüche, wobei das kathodisch färbende mineralische elektrochrome Material der elektrochromen Elektrode EC das Wolframoxid (WOₓ) ist.

5. Verfahren nach einem der vorangehenden Ansprüche, wobei das Kationenzwischenlagematerial der Gegenelektrode (CE) aus der Gruppe ausgewählt ist, die von dem Wolfram- und Nickel-Mischoxid (NiWO) und dem Iridiumoxid gebildet ist.

6. Verfahren nach einem der vorangehenden Ansprüche, wobei der ionisch leitende mineralische feste Elektrolyt (IC) aus der Gruppe ausgewählt ist, die von dem Siliziumoxid (SiO₂), dem Tantaloxid (Ta₂O₅) und dem Niobiumoxid (Nb₂O₅) gebildet ist.

7. Verfahren nach einem der vorangehenden Ansprüche, wobei die Temperatur der Seite des Substrats, die der ersten Seite gegenüberliegt, 100 °C, selbst 50 °C und vor allem 30 °C während der thermischen Behandlung nicht überschreitet.

8. Verfahren nach einem der vorangehenden Ansprüche, wobei die Strahlungsvorrichtung ein Laser ist, vorzugsweise ein Laser, der einen Laserstrahl sendet, der im Bereich des elektrochromen Stapels eine Linie bildet, welche die gesamte Breite des elektrochromen Stapels bedeckt.

9. Verfahren nach einem der Ansprüche 1 bis 7, wobei die Strahlungsvorrichtung eine Blitzlampe ist.

10. Verfahren nach einem der vorangehenden Ansprüche, wobei das Aufbringen der Gesamtheit der Dünnschichten des elektrochromen Stapels mittels Sputtern, unterstützt durch Magnetfeld, durchgeführt wird.

## Claims

1. A process for manufacturing an electrochromic glazing unit comprising the following steps:
(a) forming, on one face of a glass sheet, a complete all-solid-state electrochromic stack comprising in succession:
- a first layer of a transparent conductive oxide (TCO1);
- a layer of a cathodically colored mineral electrochromic material, which layer is called the electrochromic electrode (EC);
- a layer of an ionically conductive mineral solid electrolyte (CI);
- a layer of a cation intercalation material, which layer is called the counter electrode (CE); and
- a second layer of a transparent conductive oxide (TCO2); and
(b) heat treatment of the complete electrochromic stack by irradiation with radiation having a wavelength comprised between 500 and 2000 nm, said radiation originating from a radiating device placed facing the electrochromic stack, a relative movement being created between said radiating device and said substrate so as to raise the electrochromic stack to a temperature at least equal to 300°C for duration shorter than 100 milliseconds.

2. The process as claimed in claim 1, **characterized in that** the step of forming a complete all-solid-state electrochromic stack comprises a final annealing step in an annealing lehr, preferably at a temperature comprised between 350 and 450°C and in particular between 370 and 410°C.

3. The process as claimed in claim 1 or 2, in which the transparent conductive oxide forming the transparent conductive oxide layers TC01 and TCO2 is chosen from the group formed by mixed indium tin oxide (ITO) and aluminum- and/or gallium-doped zinc oxide.

4. The process as claimed in any one of the preceding claims, in which the cathodically colored mineral electrochromic material of the electrochromic electrode EC is tungsten oxide (WOₓ).

5. The process as claimed in any one of the preceding claims, in which the cation intercalation material of the counter electrode (CE) is chosen from the group formed by mixed tungsten nickel oxide (NiWO) and iridium oxide.

6. The process as claimed in any one of the preceding claims, in which the ionically conductive mineral solid electrolyte (IC) is chosen from the group formed by silica (SiO₂), tantalum oxide (Ta₂O₅) and niobium oxide (Nb₂O₅).

7. The process as claimed in one of the preceding claims, in which the temperature of that face of said substrate which is opposite said first face does not exceed 100°C, or even 50°C, and especially 30°C, during the heat treatment.

8. The process as claimed in one of the preceding claims, in which the radiating device is a laser, preferably a laser emitting a laser beam forming at the electrochromic stack a line covering the entire width of the electrochromic stack.

9. The process as claimed in one of claims 1 to 7, in which the radiating device is a flash lamp.

10. The process as claimed in any one of the preceding claims, in which all of the thin layers of the electrochromic stack are deposited by magnetron sputtering.
